Europäisches Patentamt

European Patent Office

Office européen des brevets

(19)

(11) **EP 1 397 622 B1**

(12) **EUROPEAN PATENT SPECIFICATION**

(45) Date of publication and mention
of the grant of the patent:
**01.12.2004 Bulletin 2004/49**

(51) Int Cl.[7]: **F24J 2/48**

(86) International application number:
**PCT/IT2002/000372**

(21) Application number: **02743634.4**

(22) Date of filing: **06.06.2002**

(87) International publication number:
**WO 2002/103257 (27.12.2002 Gazette 2002/52)**

(54) **SURFACE COATING OF THE COLLECTOR TUBE OF A LINEAR PARABOLIC SOLAR CONCENTRATOR**

OBERFLÄCHENBESCHICHTUNG FÜR KOLLEKTORROHR EINES LINEAREN PARABOLISCHEN SONNENKONZENTRATORS

REVETEMENT DE SURFACE DE TUBE COLLECTEUR DE CONCENTRATEUR SOLAIRE PARABOLIQUE LINEAIRE

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **18.06.2001 IT RM20010349**

(43) Date of publication of application:
**17.03.2004 Bulletin 2004/12**

(73) Proprietor: **ENEA - ENTE PER LE NUOVE
TECNOLOGIE, L'ENERGIA E L'AMBIENTE
00196 Roma (IT)**

(72) Inventors:
 • **RUBBIA, Carlo
 CH-1208 Genève (CH)**
 • **ANTONAIA, Alessandro
 I-80055 Portici (NA) (IT)**
 • **ESPOSITO, Salvatore
 I-80055 Portici (NA) (IT)**

(74) Representative: **Sarpi, Maurizio et al
Studio FERRARIO
Via Collina, 36
00187 Roma (IT)**

(56) References cited:
**WO-A-97/00335          DE-C- 4 344 258
US-A- 5 523 132**

 • **SATHIARAJ T S ET AL: "Ni-Al2O3 cermet solar
absorbers by RF planar magnetron sputtering
for high temperature applications" SOLAR
ENERGY MATERIALS, ELSEVIER SCIENCE
PUBLISHERS B.V. AMSTERDAM, NL, vol. 18, no.
6, June 1989 (1989-06), pages 343-356,
XP000068655**

**Description**

The present invention relates to the sector of solar plants for the production of energy and particularly to a novel material to be used as a surface coating or coating of the heat collector element (HCE) of a solar plant, preferably of the kind with linear parabolic mirrors, apt to operate at high temperatures.

Presently, the materials suitable to be used as surface coatings of the solar HCE are those which behave in a selective manner with respect of the incident radiation, that is the materials, which optic properties of reflection, absorption and hemispheric emission change remarkably with the wavelength of the radiation ranging from the radiation zone of the solar spectrum to the zone of the thermal infrared. The coating to be formed should have a behaviour possibly near to the ideal one, that is with a reflectivity = 0 (unitary absorptivity) in the spectrum zone of the solar radiation and an unitary reflectivity (emissivity = 0) in the zone of the thermal infrared with a stepped passage between the both zones.

The materials, which are generally used as solar absorbers are porous metals, degenerated semiconductors and "CERMETS", which are composite ceramic-metallic materials, in which metal particles are dispersed in a ceramic matrix.

Particularly, the CERMETS are materials which fulfil the above said requirements by that they have a high absorption peak in the solar spectrum zone and a low emissivity in the thermal infrared zone. The interest for these composite materials began in 1950, when Tabor, Gier and Dunkle have presented their first results about the use of the CEMETS as coating materials for the selective absorption of the solar radiation. Successively, the selective absorption characteristics of several composite materials have been studied, among which Cu, Ni, Co, Pt, Cr, Mo, W, Al and Ag were more employed metallic materials, whereas the ceramic matrix was mainly formed by $SiO$, $SiO_2$, $Al_2O_3$, AlN and MgO. Some of these materials have been principally commercialized for carrying out power generating plants (from few KW to some tens MW).

The first composite materials carried out as selective absorbers are formed by a layer of CERMET, having a homogeneous volumetric metal fraction, inserted between a metal layer, operating as an infrared reflector, and a layer of antireflection material allowing an improvement of the absorption of the solar spectrum. T.S. Sathiaray et al. have deposited on a substrate of Mo, 70nm of $Ni\text{-}Al_2O_3$ CERMET having a Ni volumetric fraction of 0,21 and have covered it with 60nm of antireflection $SiO_2$. This structure presented an absorption of 0,87 and an emissivity 0,07 at 100°C. Similar structures have been realized and it was possible to decrease from time to time the emissivity at cost of lower values of the absorption, or to improve the absorption at cost of higher values of the emissivity.

In any case, the absorption values, attained by this structure kind, are not sufficiently high for being used for the realization of the coating materials for thermoelectric appliances; furthermore, when the operating temperature increased over 300°C, the emissivity drastically increased causing a degradation of the coating performances.

Successively, studies have been made about coatings with more complex structures, for trying to reach absorptions higher than 0,9 and emissivities as possible low at high temperatures.

The first structure which has been studied and realized was that with a variable metal content, dispersed in the ceramic matrix. Several works performed starting from 1977 presented the advantages attained by inserting between the metal reflector and the antireflection layer a CERMET having a metal volumetric fraction decreasing from the metal reflector to the antireflection layer.

Studies made in these years by I.T. Ritche and B. Window have evidenced that among several possible profiles disclosing the metal content in the ceramic matrix, the linear one maximized the solar absorption.

Studies which followed, among which those made by Qi-Chu Zhang, evidenced that these kinds of materials, even if they presented the highest possible absorption, showed an emissivity, which quickly increased with the increase of temperature. This increase was due to two kind of effects: the superimposition of wavelength of the solar spectrum on the spectrum re-irradiated from the coating, which increased with the increase of the temperature; the selectivity of the continuously variable profile structure, which was not so evident at the passage from the low reflectivity zone in the solar spectrum to the high reflectivity zone. For obviating this behaviour at the high temperature of the continuously variable profile CERMET, Qi-Chu Zhang suggested an alternative structure consisting of a series of superimposed CERMET layers, each with different metal volume fractions, inserted between a metallic reflector and an antireflection layer. By a suitable selection of metal volumetric percentage in the CERMET layers it was possible to modify the selective properties of the coating by displacing the transition between the high reflectivity zone and the low reflectivity zone, so as it resulted in the continuously variable linear profile structures by modifying the slop of the profile. Particularly, Qi-Chu Zhang suggested to realize the coating preferably by increasing the metal volumetric fraction from the layer contacting the metal toward that contacting the antireflection layer.

Finally, by selecting the thickness of the layer it was possible to attain a more sharp transition between the low reflectivity in the solar spectrum and the high reflectivity in the infrared by exploiting the benefic effects of the interference among the signals reflected from the several layers. Thus, notwithstanding this structure was not apt to give absorption values comparable with those of the continuously variable profile structure, it was able to assure performances improving with the increase of the operating temperature of the coating.

Till to-day the both structures, t.i. that with the multilayer CERMET and that with the continuously varying profile, have been employed in the commercial sector for the realization of domestic and industrial systems for air-conditioning, for energy production and for desalination of salt waters. It should be noted that, in general, the working temperature of the coatings does not exceed 400°C, so that the performances of the systems are comparable with one another, independently from the structure used as coating.

Presently, among the companies engaged in the production of solar collectors for the high temperatures, and thus suitable for being used for the power generation, there may be mentioned the Israel Company SOLEL Solar Systems (previously Luz International Limited) and the China company TurboSun Energy Company. The technical approaches of said two Companies are wholly different from the point of view of the collection construction, but above all, from the point of view of the kind of employed CERMET.

The Israeli Company, having now a twenty years experience matured on the US plants, has concentrated its research and production efforts on the continuously variable profile CERMET: particularly the recent evolution of the collector for linear concentration plants (LS-3) uses a CERMET formed by Mo-Al$_2$O$_3$. The absorption and emission values supplied by the SOLEL company are respectively of 0,97 and 0,08 at 400°C (the working temperature is any way indicated as equal to 380°C). As to the China-Company, the development line of their products relates to the use of two layer CERMETS (developed in co-operation with the Universities of Peking and Sydney). The product as at present in commerce is a CERMET formed by AIN-SS (Stainless steel)/Cu, the operating characteristics of which, as supplied by the company, are 0,94-0,96 as to the absorptivity, whereas as to the emissivity a value lower than 0,10 at 350°C is indicated.

As it clearly results from the analysis just now performed, one of the greatest limits of the CERMET coatings as at present known is the value of the maximum temperature at which they may work with good performances. An useful parameter for comparing the performances of the solar concentrators of the thermo-electric plants is the photo-thermal conversion efficiency ($\eta_{pt}$) :

$$\eta_{pt} = \alpha - \varepsilon_h \frac{\sigma T^2}{CI}$$

wherein $\alpha$ is the absorptivity, $\varepsilon_h$ is the emissivity, $\sigma$ is the constant of Stefan-Boltzmann, T is the temperature of the coating, I is the irradiativity of the direct component of the solar spectrum calculated at AM 1,5, and C is the concentration factor (span of the mirror/circumference of the collector). The photo-thermal conversion efficiency has been used as parameter for comparing the performances of the commercial products at the temperature, for which they are designed, of 400°C, and at the temperature of 580°C. In this comparison, the efficiency has been calculated with a concentration factor of 26, typical for linear parabolic mirror plants. The commercial coatings which have been examined, are two: the first one realized with a continuously variable profile CERMET layer and the second one realized with two homogeneous CERMET layers.

In the both cases, at the comparison between average and high working temperatures, the conversion efficiency drastically decreased with the increase of the temperature, passing from 0,875 to 0,675 in the first case and from 0,905 to 0,715 in the second case.

The material of the coating according to the present invention is adapted for being used as coating for a solar collector, which extends along the focal line of the concentrator and reaches a temperature substantially of 550°C of the outflowing fluid.

In such conditions, the thermo-electric efficiency of the plant coated according to the invention is higher than that of the thermoelectric system as realized till to-day, which works at lower temperatures (< 400°C) or utilizes conventional further heatings of the fluid for attaining optimal working temperature.

According to the invention, the use of higher fluid temperatures allows to attain high efficiencies of the turbine, since it is not necessary to heat the fluid before its input into the rotor.

For the uses, as here above disclosed, the CERMETS result to be the more versatile and more temperature resistant materials, which assure better performances in terms of a high absorption of the solar spectrum and of a low emissivity in the infrared.

Moreover, the greatest part of the collectors available on the market can not be employed in a thermo-electric solar plant designed for operating at a maximum temperature of 580°C, because they have problems of structural and mechanical stability. In fact, since such known collectors are designed for working at temperature, which are lower than those attained according to the invention, their mechanical and structural characteristics could be altered and even if not, it would be in any case necessary to evaluate the coating properties at the new temperature conditions.

Thus, a first object of the invention is that to realize a coating material for collector tubes having a high structural and mechanical stability within the entire operating temperature range, which is much higher than the working temperatures of at present known coatings, particularly between 300°C and 580°C.

A second object of the invention is that to realize a coating material of the above said kind, apt to assure a high absorptivity in the solar radiation range.

A third object of the invention is to realize a coating material of the above said kind, apt to assure a low emissivity at the maximum working temperature, preferably of 580°C, in a solar plant for the power production by a linear parabolic mirror technology.

A fourth object of the invention is to realize a coating material of the above said kind, apt to assure excellent performances in terms of high absorptivity and low emissivity within the whole working temperature range (300°-580°C) along the linear collector (0-600m), that is the possibility to produce a single coating material kind, with obvious technologic and economic advantages in the production phase.

According to the invention, all this has been attained by realizing a multilayer coating material according to claim 1, comprising a lower metal layer and an upper antireflection layer, between which two layers of composite ceramic-metal or CERMET material, with different metal volumetric fraction, are arranged. Particularly, the ceramic matrix of the CERMET consists of amorphous silicon dioxide ($SiO_2$) and moreover, the lower CERMET layer has a metal volumetric fraction greater than that of the upper CERMET layer.

The invention will be better understood from the following description of a preferred embodiment thereof shown in way of a non limitative example in the enclosed drawings, in which

the figures 1A and 1B show tested structures for a coating according the invention, respectively a variable profile CERMET and double layer CERMET;

the figure 2 is a diagram of a spectral reflectivity of a coating B of a variable profile CERMET and of a coating D of a double layer CERMET;

the figure 3 is a diagram showing the spectral reflectivity of a coating C with a lower emissivity and of a coating D with a higher absorptivity, both having a double CERMET layer;

the figure 4 is a diagram showing the hemispheric emissivity and photo-thermal conversion efficiency of the coating D along the collector.

The present invention starts from the need to realize a novel material having selective properties at the wavelength of solar radiation, which allow to employ it as a coating for collectors of the linear concentration system of a thermoelectric solar plant working at middle-high temperatures.

In other words, the matter is a novel selective structure assuring, at the maximum working temperature of the plant of 580°C, photo-thermal conversion efficiencies higher than 0,8 for a solar concentration factor of 26.

In the research phase there have been considered many metallic and ceramic materials employed in commercial systems with structural and mechanic properties stable at high temperatures.

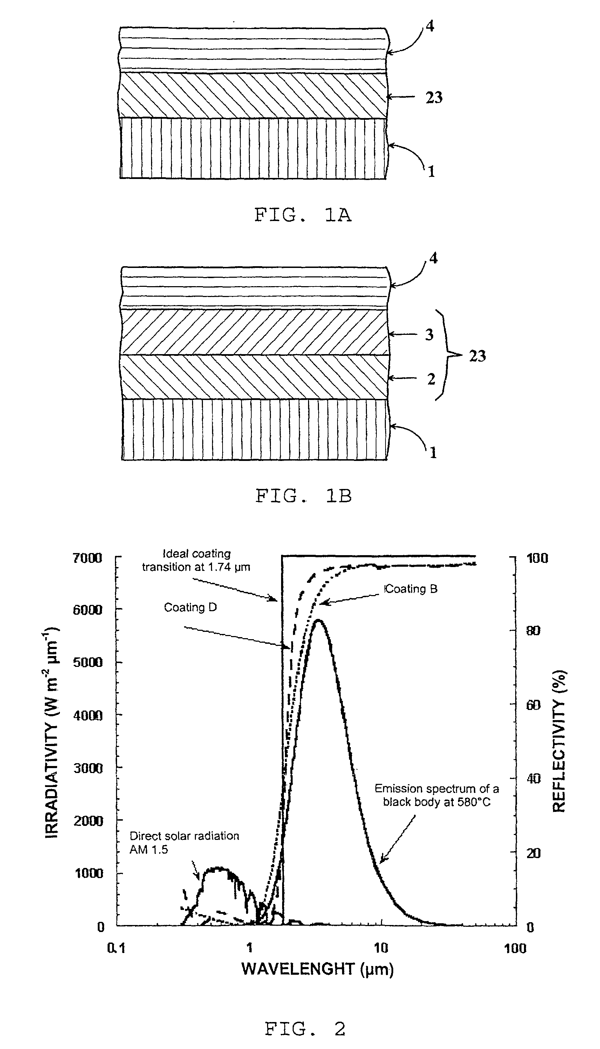

Fig. 1 shows two structural typologies tested for a coating. Both of them have a CERMET layer 23, respectively with a continuously variable profile (Fig. 1A) or with a double layer (Fig. 1B), inserted between a metal layer 1 and an antireflection layer 4.

According to the invention, a double layer CERMET is preferred with respect to a multilayer CERMET, since the researches have shown that to the greater structural complexity of the CERMET, with more than two layers, does not correspond a real advantage in term of performances.

The research carried out on several structures has evidenced that, among the coatings with performances comparable at high temperatures, that formed of molybdenum and amorphous silicon dioxide presents the best combination between production costs and stability of the structural and mechanical properties at high temperatures.

In the case of the continuously variable linear profile Mo-$SiO_2$ CERMET there have been tested about 1200 structures and about 400000 structures have been tested in the case of the double layer CERMET.

The following parameters have been varied in the first case:

- metal layer 1 with a thickness from 100 to 150nm;
- antireflection layer 4 with a thickness from 5 to 100nm;
- continuously variable linear profile CERMET layer 23 with a thickness from 50 to 300nm.

In the second case (double layer) the thickness of the metal has been fixed in 100nm, whereas the following parameters have been varied:

- lower CERMET layer 2 with a thickness from 40 to 80nm;
- lower CERMET layer 2 with a metal volumetric fraction from 0.3 to 0.9;
- upper CERMET layer 3 with a thickness from 40 to 80nm;
- upper CERMET layer 3 with a metal volumetric fraction from 0.1 to 0.6;
- antireflection layer 4 with a thickness from 40 to 80nm.

In the optimization phase of the structure with the linear profile CERMET, there have been isolated 123 structures having a photo-thermal conversion efficiency higher than 0.78 at the temperature of 580°C. Among them, there have been selected only two structures: that having the lowest emissivity (coating A) and that having the highest absorption (coating B).

The following table 1 shows the structural parameters of these two coatings: d indicates the thickness of the layer and ff indicates the metal volumetric fraction in the ceramic matrix.

In the table 2 there are indicated photo-thermal parameters of the two coatings at the temperature of 580°C.

The coating with the variable profile CERMET allows to attain, at the temperature of 580°C, better performances with respect to those of the here above disclosed homologous structures available on the market, but unfortunately does not fulfil the requirement, as established at the designing phase, of a photo-thermal conversion efficiency greater than 0.8.

Table 1:

| | Mo (1) | CERMET (23) Mo-$SiO_2$ | $SiO_2$ (4) |
|---|---|---|---|
| Coating A | d = 130 nm ff = 1 | d = 140 nm ff = linear variation 1→0 | d = 50 nm ff = 0 |
| Coating B | d = 100 nm ff = 1 | d = 220 nm ff = linear variation 1→0 | d = 50 nm ff = 0 |

Table 2:

| | Coating A | Coating B |
|---|---|---|
| $\alpha$ | 0,87 | 0,93 |
| $\varepsilon_h$ | 0,059 | 0,099 |
| $\eta_{pt}$ | 0,78 | 0,78 |

An analogous optimization procedure has been carried out for the coating having a double CERMET layer. In this case, the structures have been selected so as to have a photo-thermal conversion efficiency at 580°C higher than 0.83 and an emissivity lower than 0.07. Among 200 structures individuated after this first selection, there have been selected only two structures, the first one with a lowest emissivity (Coating C) and the second one with a highest absorptivity (Coating D).

The Table 3 shows the structural parameters of these two coatings, whereas the Table 4 shows the photo-thermal parameters. In this case, the coating having the double CERMET layer succeeds in fulfilment of the initial requirement and its performances are considerably higher than similar structures as at present known.

Table 3:

| | Mo (1) | CERMET (2) Mo-$SiO_2$ | CERMET (3) Mo-$SiO_2$ | $SiO_2$ (4) |
|---|---|---|---|---|
| Coating C | d = 100 nm ff = 1 | d = 45 nm ff = 0,5 | d = 60 nm ff = 0,2 | d = 60 nm ff = 0 |
| Coating D | d = 100 nm ff = 1 | d = 75 nm ff = 0,5 | d = 75 nm ff = 0,2 | d = 70 nm ff = 0 |

Table 4:

|  | Coating C | Coating D |
|---|---|---|
| $\alpha$ | 0,90 | 0,93 |
| $\varepsilon_h$ | 0,047 | 0,065 |
| $\eta_{pt}$ | 0,832 | 0,835 |

From a comparison between the coatings A and B having a linear profile and homologous coatings C and D with a double CERMET layer, it is immediately evident that the performances of the last two coatings are higher than those of the first ones. The reason thereof results clearly from Fig. 2, wherein the spectral reflectivity of the Coating B with the linear profile CERMET is superimposed on that of the Coating D with the double CERMET layer: notwithstanding that the two coatings have the same absorptivity, the emissivities are very different owing to a minor slope of the transition between the solar spectrum zone and the thermal infrared zone in the case of the variable profile CERMET. This result is perfectly congruent with the here above exposed statements. For a greater clarity, in Fig. 2, there is also indicated the reflectivity of an ideal coating at the temperature of 580°C.

A further remark, which could be made with respect to the structures with a variable profile CERMET, is that such structures allow to attain an absorptivity value higher than that of the other structures: in fact among the tested structures there is one having an absorptivity value of 0.948.

But unfortunately, the high absorptivity of this structure is contrasted by a very low photo-thermal conversion efficiency (0.75) due to a high emissivity (0.13). Also this result is in accordance with hereabove exposed statements.

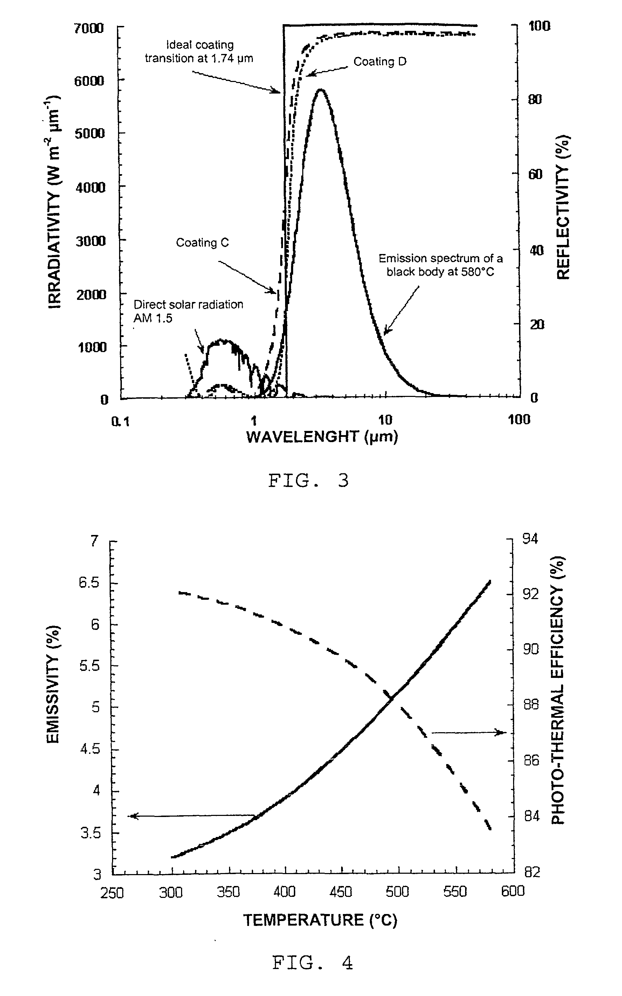

The next step was that to carry out a selection between the Coating C and the Coating D. In fig. 3 two spectral reflectivity curves are shown, the form of which is similar and near to that of the ideal reflectivity.

The both coatings have been optimized for working at the temperature of 580°C. Thus, at a lower temperature the photo-thermal conversion efficiency thereof is higher, because the absorptivity rests constant and the emissivity decreases. However, since the emissivity of the Coating D decreases more quickly with respect to the Coating C, it is advisable to select the Coating D for attaining better performances at lower temperatures. Fig. 4 shows the hemispheric emissivity and the photo-thermal conversion efficiency of the Coating D in dependence on temperature, which varies from 300°C to 580°C at the input respectively output of the linear collector.

For finishing the optimization of the coating according to the invention, it has been evaluated the advantage which could be obtained if instead of a single coating, optimized at the maximum temperature of the linear collector, there would be realized more coatings, each optimized for the different temperatures, which the linear collector reaches along its lenght. This collector is preferably 600m long and has been divided in three parts: 0-200m; 200-400m and 400-600m, for carrying out a comparison between photo-thermal performances of the coating D at the maximum temperatures of 390, 490 and 580°C of each sector respectively and those of the three coatings, each optimized for one of the maximum temperatures (first sector at 390°C, second sector at 490°C and third sector at 580°C). The following Table 5 shows the absorptivity, emissivity and photo-thermal conversion efficiency of each of the three coatings in comparison with the homologous values of the Coating D.

Table 5

|  |  | $T_{max}$=390 °C | | $T_{max}$=490 °C | | $T_{max}$=580 °C | |
|---|---|---|---|---|---|---|---|
| $\alpha$ | | Coating D | 0,93 | Coating D | 0,93 | Coating D | 0,93 |
| | | Sector 1 | 0,944 | Sector 2 | 0,948 | Sector 3 | 0,93 |
| $\varepsilon_h$ | | Coating D | 0,038 | Coating D | 0,050 | Coating D | 0,065 |
| | | Sector 1 | 0,043 | Sector 2 | 0,063 | Sector 3 | 0,065 |
| $\eta_{pt}$ (%) | | Coating D | 91,1 | Coating D | 88,5 | Coating D | 83,5 |
| | | Sector 1 | 92,1 | Sector 2 | 88,7 | Sector 3 | 83,5 |

As it can be seen, the difference between the photo-thermal parameters is so little to not justify the setting-up of different technological processes for realizing coatings optimized for the different temperatures reached along the linear collector.

Before concluding, it would be useful to note that the realization of the coating material, as until now disclosed, may be performed by one of many known deposition techniques, which have been developed for producing thin CERMET layers: from the electrodeposition till to chemical vapor deposition (CVD), from the co-evaporation to the co-sputtering.

From the commercial point of view, in the last ten years the co-sputtering has proved to be the most reliable technique for the realization of ceramic-metallic structures on a large scale with excellent performances and limited production costs. This technique provides the use of magnetron sputtering processes with DC feeding for the molybdenum and RF for the amorphous silicon dioxide.

Thus, at present said deposition technique could be the preferred one for forming the coating material according to the invention.

It could be of interest to note that, bearing in mind that it has been conceived for solar collector of a concentration system intended to work at temperatures higher than those of the plants till to now realized, the choice of the material and the designing of structure of the coating itself have been conditioned by the high temperature.

Finally, the peculiarities of the invention can be summarized in that it consists of a coating, selective in wavelength of the solar radiation, formed by a double CERMET layer 2 and 3 inserted between the reflection metal layer 1 and antireflection layer 4. Said coating is provided with a structural and mechanical stability till to 580°C, has a high absorptivity in the solar radiation range and a low emissivity at 580°C.

Furthermore, the absorption and hemispheric emissivity according to the invention are quite comparable with those of a structure optimized for several temperatures reached along the linear collector.

Thus, the surface coating as proposed by the invention assures excellent performances, comparable with those of the commercial products, but at temperatures never previously reached in linear parabolic systems.

A further novel aspect of the invention consists in the use of molybdenum and amorphous silicon dioxide for realizing surface coatings having excellent performances till to the temperature of 580°C.

Moreover, a further non negligible economic advantage of the invention is a limited cost of the material forming the structure: similar structures, as for example these with molybdenum and aluminium assure a remarkable stability at high temperatures, but with the aluminium cost, which is much higher than that of the amorphous silicon dioxide.

The following table shows, in way of example, the thickness $\alpha$ and metal volumetric fractions ff of the coating layers.

Table 6

| Mo (1) | CERMET (2) Mo-SiO$_2$ | CERMET (3) Mo-SiO$_2$ | SiO$_2$ (4) |
|---|---|---|---|
| d = 100 nm<br>ff = 1 | d=75nm<br>ff = 0,5 | d=75nm<br>ff = 0,2 | d = 70 nm<br>ff = 0 |

The present invention has been disclosed and illustrated with reference to its preferred embodiment, but obviously a skilled in the art would be able to introduce functionally and/or technically equivalent changes and/or replacements, without going out from the protection scope of the present invention.

**Claims**

1. Use of a surface coating material on collectors of solar plants, particularly of the kind with linear parabolic mirrors, the surface coating material consisting of a multilayer structure comprising a lower metal layer (1) reflecting in the infrared and an upper antireflection material layer (4), between which two upper and lower CERMET layers (2,3) of a composite ceramic-metallic material with different metal volumetric fractions are inserted, wherein, for assuring good mechanical and optical features, even at maximum working temperature of about 580°C, the ceramic matrix of the CERMET is formed of amorphous silicon dioxide (SiO$_2$) and that:

   - the reflecting metal layer (1) has a thickness ranging from 95 to 110nm;
   - the lower CERMET layer (2) has a thickness ranging from 70 to 80nm and a volumetric metal fraction from 0.45 to 0.55;
   - the upper CERMET layer (3) has a thickness ranging from 70 to 80nm and a volumetric metal fraction between 0.15 and 0.25;
   - the antireflection material layer (4) has a thickness ranging from 65 to 75nm;

   **characterized in that** the lower CERMET layer (2) has a metal volumetric fraction higher than that of the upper CERMET layer (3).

2. Use of a coating material according to claim 1, **characterized by** that the lower metal layer (1) is formed of molybdenum, the lower CERMET layer (2) is formed of a ceramic matrix consisting of an amorphous silicon dioxide, in which molybdenum is dispersed at a volumetric fraction higher than that of the adjacent CERMET layer 3 and the upper antireflection material layer (4) consists of amorphous silicon dioxide.

3. Use of a coating material according to any one of the preceding claims, **characterized in that** it has a working temperature between 300° and 580°C, so that a maximum temperature of about 550°C is attained for the working fluid.

4. Use of a coating material according to any one of the preceding claims, **characterized in that** the reflection material layer (1) consists of molybdenum (Mo) and has a thickness of 100nm; the lower CERMET layer has a thickness of 75nm and is formed of a silicon dioxide matrix ($SiO_2$), in which molybdenum is dispersed at a volumetric fraction of 0.5; the upper CERMET layer has a thickness of 75nm and consists of a silicon dioxide ($SiO_2$) matrix, in which molybdenum (Mo) is dispersed at a volumetric fraction of 0.2 and the antireflection material layer (4) is formed of an amorphous silicon dioxide ($SiO_2$) and has a thickness of 70nm.

5. Use of a coating material according to any one of the preceding claims, **characterized in that** for a working temperature of 580°C it has an absorptivity $\alpha = 0.93$, an emissivity $\varepsilon_h$ ranging from 0.065 to 0.081 and a photo-thermal conversion efficiency ranging from 0.835 and 0.810.

**Patentansprüche**

1. Verwendung eines Oberflächenbeschichtungsmaterials an Kollektoren von Sonnenkraftwerken, insbesondere solchen mit linearen parabolischen Spiegeln, wobei das Oberflächenbeschichtungsmaterial aus einer mehrlagigen Struktur besteht, die eine untere Metallschicht (1), die im Infraroten reflektiert, und eine obere Schicht mit einem Antireflexmaterial (4) enthält, zwischen denen zwei obere und untere CERMET-Schichten (2,3) eines Kompositkeramikmetallmaterials mit unterschiedlichen Volumenanteilen an Metall eingefügt werden, worin, um gute mechanische und optische Eigenschaften, sogar bei einer maximalen Arbeitstemperatur von ungefähr 580 °C, sicherzustellen, die keramische Matrix des CERMET aus amorphem Siliciumdioxid ($SiO_2$) hergestellt ist und worin:

   - die reflektierende Metallschicht (1) eine Dicke hat, die von 95 - 110 nm reicht;
   - die untere CERMET-Schicht (2) eine Dicke hat, die von 70 - 80 nm reicht, und einen Volumenanteil von Metall von 0,45 - 0,55;
   - die obere CERMET-Schicht (3) eine Dicke hat, die von 70 - 80 nm reicht, und einen Volumenanteil von Metall zwischen 0,15 und 0,25;
   - die Schicht mit dem Antireflexmaterial (4) eine Dicke hat, die von 65 - 75 nm reicht;

   **dadurch gekennzeichnet,**
   **daß** die untere CERMET-Schicht (2) einen Volumenanteil an Metall hat, der höher ist als der der oberen CERMET-Schicht (3).

2. Verwendung eines Beschichtungsmaterials nach Anspruch 1,
   **dadurch gekennzeichnet,**
   **daß** die untere Metallschicht (1) aus Molybdän hergestellt ist, die untere CERMET-Schicht (2) aus einer Keramikmatrix, die aus einem amorphen Siliciumdioxid, in welchem Molybdän mit einem Volumenanteil oberhalb desjenigen der angrenzenden CERMET-Schicht (3), dispergiert ist, hergestellt ist, und das Material der oberen Antireflexschicht (4) aus amorphem Siliciumdioxid besteht.

3. Verwendung eines Beschichtungsmaterials nach einem der vorhergehenden Ansprüche,
   **dadurch gekennzeichnet,**
   **daß** es eine Arbeitstemperatur zwischen 300 °C und 580 °C hat, so daß eine maximale Temperatur von ungefähr 550 °C für das Arbeitsfluid erreicht wird.

4. Verwendung eines Beschichtungsmaterials nach einem der vorhergehenden Ansprüche,
   **dadurch gekennzeichnet,**
   **daß** das Material der Reflexionsschicht (1) aus Molybdän (Mo) besteht und eine Dicke von 100 nm hat; die untere CERMET-Schicht eine Dicke von 75 nm hat und aus einer Siliciumdioxid-Matrix ($SiO_2$), in welcher Molybdän mit einem Volumenanteil von 0,5 dispergiert ist, hergestellt ist; die obere CERMET-Schicht eine Dicke von 75 nm hat und aus einer Siliciumdioxid-Matrix ($SiO_2$), in welcher Molybdän (Mo) mit einem Volumenanteil von 0,2 dispergiert ist, hergestellt ist, und das Material der Antireflexschicht (4) aus einem amorphen Siliciumdioxid ($SiO_2$) gebildet ist und eine Dicke von 70 nm hat.

5. Verwendung eines Beschichtungsmaterials nach einem der vorhergehenden Ansprüche,
   **dadurch gekennzeichnet,**
   **daß** es bei einer Arbeitstemperatur von 580 °C ein Absorptionsvermögen $\alpha$ = 0,93, ein Emissionsvermögen $\varepsilon_h$, das von 0,065 - 0,081 reicht, und einen photothermischen Wirkungsgrad, der von 0,835 bis 0,810 reicht, hat.


**Revendications**

1. Utilisation d'un matériau de revêtement de surface sur des collecteurs de centrales solaires, particulièrement du type avec des miroirs paraboliques linéaires, le matériau de revêtement de surface consistant en une structure multicouche comprenant une couche métallique inférieure (1) réfléchissant dans l'infrarouge et une couche de matériau antiréflexion supérieure (4), entre lesquelles deux couches en CERMET supérieure et inférieure (2, 3) d'un matériau céramique-métallique composite avec différentes fractions volumétriques métalliques sont insérées, dans laquelle, pour assurer de bonnes caractéristiques mécaniques et optiques, même à une température de travail maximale d'environ 580 °C, la matrice céramique du CERMET est formée de dioxyde de silicium ($SiO_2$) amorphe et :

   - la couche métallique réfléchissante (1) a une épaisseur variant de 95 à 110 nm ;
   - la couche en CERMET inférieure (2) a une épaisseur variant de 70 à 80 nm et une fraction métallique volumétrique de 0,45 à 0,55 ;
   - la couche en CERMET supérieure (3) a une épaisseur variant de 70 à 80 nm et une fraction métallique volumétrique entre 0,15 et 0,25 ;
   - la couche de matériau antiréflexion (4) a une épaisseur variant de 65 à 75 nm ;

   **caractérisée en ce que** la couche en CERMET inférieure (2) a une fraction volumétrique métallique supérieure à celle de la couche en CERMET supérieure (3).

2. Utilisation d'un matériau de revêtement selon la revendication 1, **caractérisée en ce que** la couche métallique inférieure (1) est formée de molybdène, la couche en CERMET inférieure (2) est formée d'une matrice céramique consistant en du dioxyde de silicium amorphe, dans laquelle du molybdène est dispersé à une fraction volumétrique supérieure à celle de la couche en CERMET adjacente (3) et la couche de matériau antiréflexion supérieur (4) consiste en du dioxyde de silicium amorphe.

3. Utilisation d'un matériau de revêtement selon l'une quelconque des revendications précédentes, **caractérisée en ce qu'**il a une température de travail comprise entre 300° et 580 °C, de sorte qu'une température maximale d'environ 550 °C est atteinte pour le fluide de travail.

4. Utilisation d'un matériau de revêtement selon l'une quelconque des revendications précédentes, **caractérisée en ce que** la couche de matériau de réflexion (1) consiste en du molybdène (Mo) et a une épaisseur de 100 nm ; la couche en CERMET inférieure a une épaisseur de 75 nm et est formée d'une matrice en dioxyde de silicium ($SiO_2$), dans laquelle du molybdène est dispersé à une fraction volumétrique de 0,5 ; la couche en CERMET supérieure a une épaisseur de 75 nm et consiste en une matrice de dioxyde de silicium ($SiO_2$), dans laquelle du molybdène (Mo) est dispersé à une fraction volumétrique de 0,2 et la couche de matériau antiréflexion (4) est formée de dioxyde de silicium ($SiO_2$) amorphe et a une épaisseur de 70 nm.

5. Utilisation d'un matériau de revêtement selon l'une quelconque des revendications précédentes, **caractérisée en ce que** pour une température de travail de 580 °C, il a un pouvoir d'absorption $\alpha$ = 0,93, une émissivité $\varepsilon_h$ variant de 0,065 à 0,081 et un rendement de conversion photo-thermique variant de 0,835 à 0,810.

FIG. 1A

FIG. 1B

FIG. 2

FIG. 3

FIG. 4